# DEMANDE DE BREVET EUROPEEN

(11) **EP 4 593 444 A1**
(43) Date de publication de la demande: **30.07.2025**
(21) Numéro de dépôt: 25154334.4
(22) Date de dépôt: 28.01.2025
(51) Int. Cl.: H04W 16/14, H04W 52/24, H04W 28/16, H04W 72/542

(54) **PROCÉDÉ DE RECONFIGURATION DES RESSOURCES D'UNE STATION DE BASE D'UNE INFRASTRUCTURE DE RADIOCOMMUNICATION NON FÉDÉRÉE ; INFRASTRUCTURE ET PRODUIT PROGRAMME D ORDINATEUR ASSOCIÉS**

(30) Priorité: 29.01.2024 FR 2400815
(71) Demandeur: THALES, 92190 Meudon (FR)
(72) Inventeur: CAPDEVIELLE, Véronique, 92622 Gennevilliers Cedex (FR); KHUC, Doan, 92622 Gennevilliers Cedex (FR); JIA, David, 92230 Gennevilliers (FR); SCHOLLER, Franck, 92622 Gennevilliers Cedex (FR); ADRIAN, Cyril, 92230 Gennevilliers (FR)
(74) Mandataire: Lavoix

(57) **Abrégé**

Ce procédé (100, 200) de reconfiguration automatique des ressources d'une première station de base d'une infrastructure de radiocommunication comportant la première station de base et une seconde station de base, une station de base parmi les première et seconde stations de base étant fixe et l'autre station de base parmi les première et seconde stations de base étant mobile, les première et seconde stations de base n'étant pas fédérées, se caractérise en ce qu'il est mis en oeuvre par un premier calculateur associé à la première station de base, et comporte les étapes consistant à : évaluer (120, 220) périodiquement des interférences ; et, en cas de détection d'interférences, reconfigurer (140, 170, 270) au moins une ressource radio de la première station de base.

## Description

La présente invention concerne le domaine des infrastructures de radiocommunication. Elle concerne plus particulièrement le cas des infrastructures comportant une ou plusieurs stations de base fixes et une station de base en mouvement, les stations de base n'étant pas fédérées entre elles, notamment la station de base mobile n'est pas fédérée aux stations de base fixes.

Il y a plusieurs niveaux de fédération envisageables (réseau, telecom, service, radio...) Dans le présent document, la notion de fédération s'entend au niveau radio. Lorsque deux stations de base ne sont pas fédérées, elles n'échangent aucune signalisation entre elles. Les stations de base prennent alors des décisions sur l'utilisation de leurs ressources de façon autonome, i.e. sans échange explicite de messages avec d'autres stations.

Dans le contexte des infrastructures de radiocommunication, on définit une bulle comme un réseau composé d'une station de base et des équipements utilisateurs en communication avec cette station de base. Dans une bulle, chaque équipement utilisateur est servi par la station de base. Il n'est pas nécessaire que des données d'application soient échangées entre un équipement utilisateur et la station de base pour que cet équipement utilisateur appartienne à la bulle associée à cette station de base.

Une bulle est dite fixe, lorsque la station de base associée est fixe, ou mobile, lorsque la station de base associée est mobile, c'est-à-dire susceptible de se déplacer. Les notions de « fixe » et « mobile » sont relatives. Dans certaines applications, notamment des applications PPDR (« Public Protection and Disaster Relief », c'est-à-dire « protection du public et secours aux victimes de catastrophes »), un réseau temporaire peut être redéployé par exemple toutes les 30 mn et considéré comme fixe pendant sa durée de déploiement. La mobilité d'une station est alors à évaluer par rapport à cette durée de déploiement.

Au cours de l'exploitation de l'infrastructure, deux bulles peuvent utiliser le même canal fréquentiel ou des canaux proches. Cependant, si tel est le cas pour une bulle mobile qui est amenée au cours de son déplacement à couvrir, même partiellement, une bulle fixe, des interférences vont être créées. Ces interférences vont perturber les communications à la fois sur la bulle mobile et sur la bulle fixe. Il est alors nécessaire de reconfigurer les ressources radio de l'une et/ou de l'autre bulle. Mais, dans la mesure où les bulles interférentes ne sont pas fédérées, elles ne peuvent pas négocier entre elles l'utilisation de la ressource radio pour éviter les interférences.

L'article de Mahima Mehta et al., "A Self- Organized Resource Allocation using Inter-Cell interférence Coordination (ICIC) in Relay-Assisted Cellular Networks", April 2014 1) propose une allocation des ressources fréquentielles pour éviter les interférences entre des bulles fixes. Cette méthode est appelée ICIC, pour « Inter-Cell Interference Coordination », c'est-à-dire « coordination des interférences intercellulaires ».

Cet art antérieur ne concerne pas le cas où au moins une station de base est mobile par rapport aux autres stations de base fixes.

Mais surtout, cette allocation des ressources radio nécessite une coordination entre les stations de base, ce qui n'est pas faisable sans fédération effective des bulles par l'infrastructure de radiocommunication.

Or, si la fédération n'est plus assurée, limitée ou coupée, les stations de base ne peuvent plus être reconfigurées de manière coordonnée et la qualité des communications n'est alors plus assurée, ce qui peut être particulièrement préjudiciable dans le cas de communications critiques.

Il y a donc un besoin afin d'assurer une continuité de service des communications en cours sur un ensemble de bulles comportant des bulles fixes et des bulles mobiles lorsqu'il n'y a pas de fédération au niveau radio prévue entre ces bulles ou lorsque cette fédération a été temporairement perdue.

Le but de la présente invention est alors de proposer un procédé de reconfiguration automatique et autonome des stations de base suite au déplacement d'une bulle mobile causant des interférences sur une bulle fixe.

Pour cela l'invention a pour objet un procédé de reconfiguration automatique des ressources d'une première station de base d'une infrastructure de radiocommunication, l'infrastructure de radiocommunication comportant la première station de base et une seconde station de base, une station de base parmi les première et seconde stations de base étant fixe et l'autre station de base parmi les première et seconde stations de base étant mobile, les première et seconde stations de base n'étant pas fédérées, caractérisé en ce que le procédé est mis en oeuvre par un premier calculateur associé à la première station de base, et comporte les étapes consistant à : évaluer périodiquement des interférences ; et, en cas de détection d'interférences, reconfigurer au moins une ressource radio de la première station de base.

Suivant des modes particuliers de réalisation, le procédé comporte une ou plusieurs des caractéristiques suivantes, prises isolément ou suivant toutes les combinaisons techniquement possibles :
- la ressource radio reconfigurée est choisie parmi une puissance, une fréquence et une directivité de la première station de base.
- l'étape d'évaluation des interférences consiste à détecter des interférences subies sur une première bulle associée à la première station de base et causées par les communications sur une seconde bulle associée à la seconde station de base, ou à estimer des interférences induites sur la seconde bulle par les communications sur la première bulle.
- l'étape d'évaluation des interférences est fondée sur des mesures de la qualité des communications sur des liaisons montantes et/ou descendantes entre chaque équipement utilisateur connecté à la première station de base.
- la première station de base étant la station mobile et la seconde station de base étant la station fixe, lors de l'étape de reconfiguration, la première station de base, pour ne pas perturber les communications des équipements utilisateurs connectés à la seconde station de base, ajuste une puissance d'émission instantanée pour chercher à réduire les interférences et, lorsque la puissance d'émission instantanée devient inférieure ou égale à une puissance d'émission minimum, effectue un repli fréquentiel sur une sous-bande dite de repli, identifiée comme libre.
- la première station de base étant la station fixe et la seconde station de base étant la station mobile, lors de l'étape de reconfiguration, la première station de base, pour protéger ses communications des équipements utilisateurs connectés à la première station de base, effectue un repli fréquentiel sur une sous-bande dite de repli, identifiée comme libre.
- la sous-bande de repli est identifiée par un balayage fréquentiel de la bande de fréquence de fonctionnement de l'infrastructure de radiocommunication ; la sous-bande de repli est identifiée à partir des interférences détectées ; ou la sous-bande de repli est prédéfinie par configuration de la première station de base.
- pour prédéfinir la sous-bande de repli, le procédé comporte en outre une étape de configuration initiale dans laquelle le contrôleur associé à la première station de base mémorise une première liste de sous-bandes allouées à la première station de base et le contrôleur associé à la seconde station de base mémorise une seconde liste de sous-bandes interdites à la seconde station de base, la première liste et la seconde liste se recouvrant sur au moins une sous-bande défini comme la bande de repli permettant à la première station de base de se replier en cas de détection d'interférences.
- une sous-bande est une portion de bande - BWP (« BandWidth Part ») telle que définie dans la version 15, publiée en décembre 2017, du standard de cinquième génération - 5G de téléphonie mobile.
- l'étape d'évaluation des interférences correspond à l'exécution d'un algorithme d'apprentissage automatique convenablement paramétré pour, à partir d'une pluralité de mesures de la qualité des communications sur des liaisons montantes et/ou descendantes

entre chaque équipement utilisateur connecté à la première station de base, déterminer une classe d'interférences.

L'invention a également pour objet une infrastructure et un produit programme d'ordinateur pour la mise en oeuvre du procédé précédent.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
- La figure 1 est une représentation schématique sous forme de modules fonctionnels d'une infrastructure de radiocommunication permettant la mise en oeuvre du procédé selon l'invention ;
- La figure 2 est une représentation sous forme de blocs du procédé selon l'invention ; et,
- La figure 3 est un schéma de la bande de fréquence lors de l'étape de repli fréquentiel du procédé de la figure 2.

On considère une infrastructure de radiocommunication comportant des stations fixes et une station mobile.

Il n'y a pas de fédération entre ces stations, ou tout au moins entre l'ensemble des stations fixes, d'une part, et la station mobile, d'autre part.

Pour rendre cette infrastructure plus résiliente, l'invention repose sur :
- une détection périodique, par une station de base, des interférences sur les communications des utilisateurs servis par cette station de base. Cette détection se fait sans coordination entre les stations de base. Chaque station de base découvre son voisinage en se fondant sur ses propres mesures de qualité sur les liens de communication dans sa bulle ; et,
- lorsque des interférences sont détectées, une réallocation en temps-réel des ressources radio de la station de base, sans coordination directe avec les stations de base des bulles interférentes et/ou interférées. Cette réallocation consiste en une dimunition de la puissance de la station entrante, ou en une réallocation fréquentielle des sous-bandes si la baisse de puissance ne permet pas de garantir les qualités de service - QOS (« quality of service ») demandées.

Avantageusement, le procédé est adapté en fonction de la nature de la station de base pour laquelle il est mis en oeuvre, à savoir si la station de base est du type fixe ou mobile, pour déployer une stratégie consistant par exemple à privilégier les communications des stations fixes (puisque ces dernières appartiennent à un réseau a priori déjà déployé) sur celles de la station mobile, en reconfigurant d'abord la station mobile pour limiter l'impact de ses propres émissions, puis éventuellement la station fixe pour se protéger des interférences causées par les émissions de la station mobile.

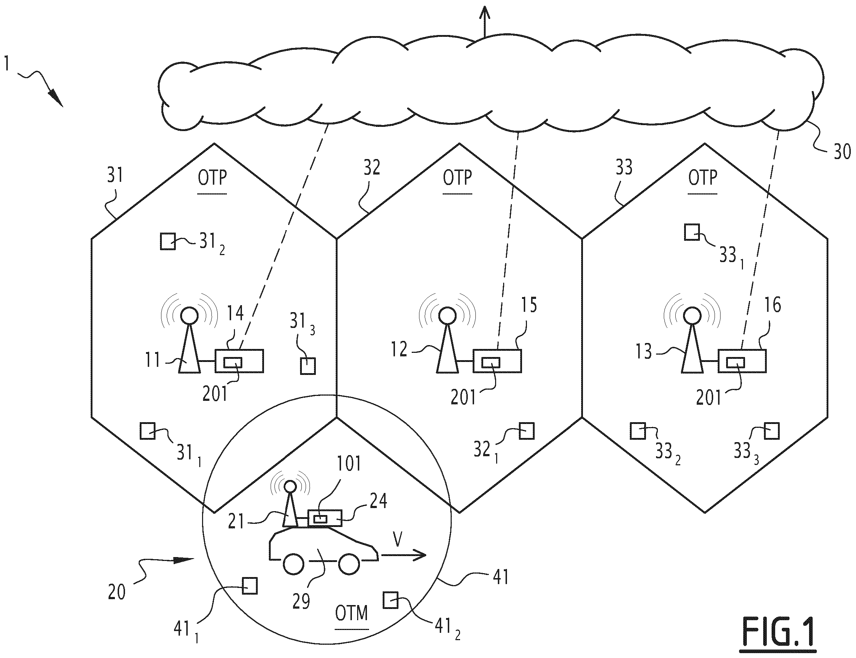

La figure 1 illustre un mode de réalisation préféré d'une infrastructure de radiocommunication pour la mise en oeuvre du procédé selon l'invention.

Cette infrastructure 1 comporte un réseau de radiocommunication fixe 10 et un réseau de radiocommunication mobile 20.

Le réseau fixe 10 est par exemple un réseau déployé. Il comporte des stations de base fixes, un contrôleur de station de base associé à chaque station de base, et un réseau coeur 30 auquel chaque contrôleur de station de base est connecté.

Une station de base - BTS (« Base Transceiver Station ») constitue un point d'accès radio pour les équipements mobiles situés dans la zone de couverture de cette station de base. Elle comporte des moyens d'émission/réception. Elle est en charge des opérations de modulation, démodulation, codage correcteur d'erreurs, etc., de la diffusion d'informations sur la cellule et de la remontée d'informations sur la qualité de transmission au contrôleur de station de base auquel elle est connectée.

Le contrôleur radio - BSC (« Base Station Controller ») gère les canaux radio (contrôle l'admission d'appels, l'itinérance intercellulaire (« handover »), et contrôle de puissance). Il supervise l'activation/désactivation d'un canal.

Les stations fixes sont dénommées stations OTP (« On The Pause » en anglais) dans ce qui suit.

Sur la figure 1 trois stations fixes sont illustrées, respectivement 11, 12 et 13.

La station de base fixe 11 est associée au contrôleur 14, la station de base fixe 12 est associée au contrôleur 15, et la station de base fixe 13 est associée au contrôleur 16.

A chaque station de base fixe est associée une cellule fixe.

Un équipement utilisateur présent dans une cellule peut établir un lien de communication avec la station de base de cette cellule.

Une bulle est composée de l'association d'une station de base et des équipements utilisateurs en liaison avec cette station de base.

Ainsi par exemple, sur la figure 1, la bulle fixe 31 regroupe les équipements utilisateurs 31₁, 31₂ et 31₃ en liaison avec la station de base fixe 11 ; la bulle fixe 32 regroupe l'équipement utilisateur 32₁ en liaison avec la station de base fixe 12 ; et la bulle fixe 33 regroupe les équipements utilisateur 33₁, 33₂ et 33₃ en liaison avec la station de base fixe 13.

Les stations fixes ne sont pas fédérées entre elles.

Le réseau mobile 30 comporte au moins une station mobile, comme la station de base mobile 21 associée à un contrôleur de station de base 24.

La station mobile est dénommée station OTM (« On The Move » en anglais) dans ce qui suit.

La station mobile 21 est par exemple embarquée à bord d'un véhicule 29 se déplaçant avec la vitesse *V̅.*

La zone de couverture de la station de base mobile 21 définit une cellule mobile.

Un équipement utilisateur présent dans la cellule mobile, comme les équipements 41₁ et 41₂ peut établir un lien de communication avec la station de base mobile 21. Il s'agit par exemple de plusieurs récepteurs dans le véhicule 29, embarquant la station de base mobile 21.

La bulle mobile 41 est alors composée de l'association de la station de base mobile 21 et des équipements utilisateurs qu'elle sert.

La station mobile 21 n'est pas fédérée aux stations fixes 11, 12 et 13.

Au cours de l'exploitation de l'infrastructure la station OTM 21 se déplace de sorte que la bulle mobile 41 associée chevauche la bulle fixe, par exemple la bulle 31, associée à une station fixe, par exemple la station OTP 11.

Il y a donc un risque que les communications dans la bulle mobile 41 et les communications dans la bulle fixe 31 interfèrent entre elles, dégradant de ce fait la qualité des échanges en cours.

Les stations de base fixes et mobiles interférentes sont sans coordination explicite entre elles au moment de la mise en oeuvre du procédé. Soit cette coordination n'a jamais existé, soit elle est momentanément indisponible.

Selon l'invention, chaque contrôleur de station de base exécute un programme adapté pour mettre en oeuvre le procédé de reconfiguration automatique selon l'invention.

Un contrôleur radio est un ordinateur comportant des moyens de calcul, tels qu'un processeur, des moyens de mémorisation, tels qu'une mémoire, et des interfaces d'entrée/sortie, notamment pour la connexion à la station de base associée.

La mémoire du contrôleur radio stocke notamment les instructions de programmes d'ordinateur. En particulier, elle stocke un programme dont l'exécution permet la mise en oeuvre du procédé selon l'invention.

Avantageusement le programme est configuré en fonction de la nature de la station de base associée, station OTM ou station OTP.

Ainsi, le contrôleur 24 de la station OTM 21 exécute le programme 101, tandis que le contrôleur 14, 15, 16 de la station OTM 11, 12, 12 exécute le programme 201.

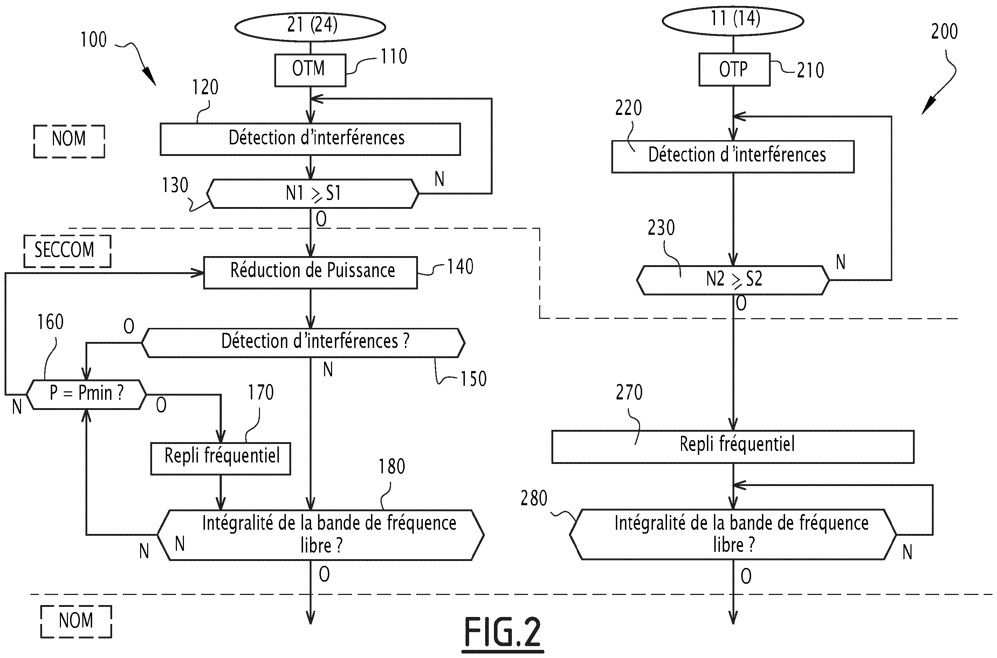

Un mode de réalisation préféré du procédé de reconfiguration automatique selon l'invention va maintenant être présenté en référence à la figure 2.

Le procédé permet, en cas de détection d'interférences par une station de base, à partir de l'évolution de la qualité des communications dans la bulle que cette station de base dessert, de reconfigurer automatiquement les ressources de cette station de base, afin de réduire ces interférences et assurer par conséquent une continuité de service aux utilisateurs des bulles interférentes.

Le procédé est mis en oeuvre alors que les stations de base ne peuvent pas communiquer directement entre elles pour négocier une reconfiguration.

Le procédé est distribué au sens où le contrôleur associé à chaque station de base met en oeuvre le procédé, i.e. exécute le programme correspondant. Ainsi, chaque station de base est autonome dans la gestion de ses ressources. De préférence, elle adapte sa reconfiguration selon qu'elle est fixe ou mobile.

La figure 2 représente la mise en oeuvre d'un mode de réalisation préféré du procédé selon l'invention d'une part pour la station OTM 21, procédé 100 réalisé par le contrôleur 24, parallèlement à la mise en oeuvre du procédé selon l'invention pour la station OTP 11, procédé 200 réalisé par le contrôleur 14, alors que la bulle mobile 41 associée à la station OTM 21, au cours de son déplacement, passe dans la bulle fixe 31 associée à la station OTP 11.

Dans le présent mode de réalisation, en cas d'interférences entre la bulle mobile et la bulle fixe, la stratégie choisie pour la reconfiguration des ressources radio donne la priorité aux communications en cours sur la bulle fixe 31, en considérant que c'est la station OTM qui vient perturber les communications de la bulle mobile associée à une station OTP appartenant à un réseau déployé.

Du fait de cette stratégie particulière, le procédé selon l'invention est adapté à la nature de la station de base pour laquelle il est réalisé.

Pour une station OTM, comme la station 21, le procédé 100 débute donc avantageusement par une étape 110 de configuration, permettant d'indiquer que la station de base à contrôler est du type OTM.

En début de procédé 100, la station 21 se trouve dans un état de fonctionnement nominal, ou mode NOM, dans lequel les communications en cours sur la bulle mobile 41 ne sont pas dégradées.

La station OTM 21 exploite alors toutes les ressources disponibles, par exemple l'ensemble de la bande de fréquence disponible pour la ressource fréquentielle.

Périodiquement, une étape de détection 120 est réalisée pour détecter d'éventuelles interférences.

La période d'itération de l'étape 120 varie en fonction des capacités de remontée des mesures radio depuis la station de base vers le contrôleur associé et les équipements utilisateurs qui y sont connectés. Par exemple, l'étape de détection 120 est itérée toutes les secondes.

L'étape de détection 120 vise à détecter les interférences causées par la présence d'au moins une bulle voisine (en l'occurrence la bulle fixe 31 associée à la station OTP 11) dans le voisinage de la station OTM 21.

Cette détection pourrait se faire par un balayage fréquentiel, mais, dans le présent mode de réalisation, cette détection s'effectue en évaluant, par le contrôleur 24, les interférences subies, c'est-à-dire les interférences causées par les émissions de la bulle fixe 31 sur les communications dans la bulle mobile 41, à partir des mesures de la dégradation de la qualité de connexion fournies par la station OTM 21.

Le contrôleur 24 exploite ainsi les données radio, telles que :
- les mesures sur les liaisons montante (« UpLink ») et descendante (« DownLink ») entre chaque équipement utilisateur 41ᵢ et la station de base 21, comme par exemple pour une infrastructure de cinquième génération - 5G les indicateurs instantanés : CQI, CSI, PMI...) ; et/ou,
- les rapports de mesures (« measurement reports ») effectués par les équipements utilisateurs 41ᵢ notamment lors d'une situation d'itinérance intercellulaire (« handover »).

Par exemple, le contrôleur 24 utilise la baisse du rapport signal sur interférence plus bruit - SINR (« signal-to-interference-plus-noise ratio ») mesuré par un équipement utilisateur 41ᵢ, grandeur qui quantifie la qualité du signal sur la liaison descendante en présence d'interférences et de bruit, cette mesure étant rapportée au contrôleur 24 via la station de base 21.

En supposant que l'impact subi par la bulle mobile à cause de la bulle fixe est en relation avec l'impact induit par la bulle mobile sur la bulle fixe, la détection d'interférences subies est un indicateur des interférences induites.

Avantageusement, le contrôleur 24 de la station OTM 21 met en oeuvre un algorithme d'intelligence artificielle - IA (ou algorithme d'apprentissage automatique « machine learning ») permettant de quantifier directement les interférences induites à partir des mesures radio collectées dans la bulle mobile. L'algorithme d'IA mis en oeuvre est par exemple capable, suite à une phase d'apprentissage adaptée, d'estimer la classe d'interférence dont relève les interférences que la bulle considérée induit sur la bulle voisine.

Cet algorithme d'lA peut avantageusement incorporer une estimation de la fiabilité de l'apprentissage en quantifiant un intervalle de confiance des prédictions.

L'étape 120 conduit à un premier résultat quantifiant un niveau d'interférences, N1 (interférences subies par la bulle mobile ou interférences causées sur la bulle mobile). Plus généralement, et notamment lorsqu'un algorithme d'lA est mis en oeuvre, on utilise la notion de classe d'interférence à la place de celle de niveau.

Dans l'étape 130, le premier résultat N1 est comparé à un premier seuil d'interférence, S1.

Au-dessous de ce premier seuil, on décide qu'aucune interférence n'est détectée ou qu'elles sont insuffisantes pour perturber significativement les communications en cours. C'est le cas par exemple lorsque la bulle mobile au cours de son déplacement tangente la bulle fixe.

Dans ces conditions, la station de base fixe reste dans l'état nominal « NOM » et le procédé 100 boucle en entrée de l'étape 120 pour une nouvelle itération de la mesure des interférences au pas de temps suivant.

En revanche, lorsque le niveau N1 est supérieur ou égal au premier seuil d'interférence S1, on décide que des interférences sont détectées et que leur niveau perturbe les communications en cours.

Avantageusement, le premier seuil S1 est choisi à une valeur basse, de manière à ce que la station OTM 21 initie une reconfiguration de ses ressources dès qu'elle présente un risque sur la qualité des communications sur la bulle voisine, a priori prioritaire selon la stratégie particulière mise en place dans le présent mode de réalisation.

Lorsque des interférences sont détectées, la station de base bascule dans un mode de fonctionnement de sécurisation des communications ou mode « SECCOM ».

Dans le mode SECCOM, une reconfiguration des ressources radio de la station OTM 21 est réalisée sur commande du contrôleur 24.

Cette reconfiguration consiste à modifier une ressource de puissance et/ou une ressource de fréquence de la station de base 21.

De préférence, pour une station OTM, lors du passage en mode SECCOM, la reconfiguration fréquentielle n'est pas automatique. En effet, si l'interférence n'est pas trop forte et est détectée assez rapidement, la station OTM commence par baisser sa puissance d'émission.

Ainsi, dans le présent mode de réalisation, une réduction de la puissance d'émission de la station OTM 21 est d'abord effectuée, et, si cela ne suffit pas pour limiter l'impact de ses émissions sur la bulle fixe 31 sans toutefois perdre ses propres communications, un repli fréquentiel de la station OTM 21 hors de la bande spectrale occupée est ensuite réalisé.

Ainsi, dans l'étape 140, le contrôleur 21 commande un ajustement de la puissance courante de fonctionnement de la station OTM 21.

Cet ajustement est de préférence calculé selon le niveau des interférences N₁ subies ou induites.

Cet ajustement est une réduction de la puissance lors de l'entrée de la bulle mobile dans la bulle fixe et une augmentation de la puissance lors de la sortie de la bulle mobile de la bulle fixe.

Suite à un ajustement de la puissance, dans l'étape 150, le contrôleur 24 met à jour le niveau des interférences N1. De préférence, la méthode de détection d'interférence de l'étape 120 est reprise à l'étape 150.

Si le niveau des interférences reste élevé, par exemple reste supérieur ou égal à S1, les étapes 140 et 150 sont itérées en boucle de manière à atteindre un palier en puissance, en dessous duquel qu'il n'y a pas d'interférences et au-dessus duquel il y a des interférences.

Par exemple, suite à l'ajustement de la puissance à l'étape 140, si des interférences sont encore détectées (N1>S1) à l'étape 150, lors de l'itération suivante de la boucle, la puissance est réduite d'un pas supplémentaire à l'étape 140 et l'effet de cette diminution sur le niveau des interférences est évalué une nouvelle fois à l'étape 150.

Par exemple, suite à l'ajustement de la puissance à l'étape 140, si des interférences ne sont plus détectées (N1<S1) à l'étape 150, lors de l'itération suivante de la boucle, la puissance est augmentée d'un pas à l'étape 140 et l'effet de cette augmentation sur le niveau des interférences est évalué à l'étape 150.

Avantageusement, on s'assure que la puissance instantanée P, reste à tout moment supérieure à une puissance minimale Pmin.

Ainsi, à l'issue d'une itération de l'étape 150, si l'on constate qu'il y a encore des interférences, le procédé passe à l'étape 160, sinon le procédé passe à l'étape 180.

A l'étape 160, la puissance instantanée P est comparée à la puissance minimum Pmin.

Lorsque la puissance instantanée P est supérieure à la puissance minimale Pmin, le procédé 100 boucle sur l'étape 140.

En revanche, si la puissance instantanée P est égale à la puissance minimale, on sort de la boucle des étapes 140 et 150 car l'ajustement de la puissance instantanée P n'est pas suffisante pour éliminer les interférences sans passer sous la puissance minimum Pmin, ce qui signifierait la perte des communications en cours entre les équipements utilisateurs 41i et la station OTM 21 sur la bulle mobile.

Le procédé 100 passe alors dans une étape 170 de repli fréquentiel.

En effet, si la station OTM 21 est trop proche de la station OTP 31 et que, par conséquent, le niveau des interférences reste trop élevé, la station OTM 21 ne peut plus baisser sa puissance au risque de perdre ses propres communications.

Le contrôleur 41 reconfigure alors en fréquence la station OTM 21 de manière à effectuer un repli fréquentiel.

Ainsi, dans l'étape 170, la station OTM 21 se replie sur une sous-bande de fréquence dite de repli qui est une sous-bande de fréquence libre de la bande de fréquence exploitée par l'infrastructure de radiocommunication 1.

Dans un mode de réalisation simple, l'étape 170 prévoit que le contrôleur 24 pilote la station OTM 21 pour effectuer un balayage fréquentiel de l'intégralité de la bande de fréquence, afin d'identifier les sous-bandes libres de toutes interférences.

Le contrôleur de la station OTM sélectionne alors au moins une sous-bande de repli parmi les sous-bandes identifiées comme libres.

Une fois le repli fréquentiel effectué, le procédé passe dans l'étape 180.

Dans l'étape 180, le contrôleur 24 pilote la station OTM 21 pour effectuer un scan fréquentiel de l'intégralité de la bande de fréquence.

Si la bande de fréquence n'est pas totalement libre, le procédé 100 revient sur l'étape 160.

Si la bande de fréquence est libre, la station de base bascule du mode SECCOM au mode nominal NOM et le procédé 100 revient à l'étape 120.

Le procédé 200 mis en oeuvre du côté de la station OTP 11 par le contrôleur 14 débute de préférence par une étape 210 de configuration initiale, permettant d'indiquer que la station à contrôler est du type OTP.

Alors que la station OTP se trouve dans le mode de fonctionnement nominal NOM, une étape 220 de détection des interférences est réalisée.

L'étape de détection 220 est identique à l'étape 120. L'étape 210 conduit à un second résultat quantifiant le niveau des interférences, subies ou induites, N2.

Dans l'étape 230, le niveau N2 est comparé à un second seuil d'interférence, S2.

Au-dessous du seuil S2, on considère qu'aucune interférence n'est détectée. Le procédé 200 revient à l'étape 220 en maintenant la station OTP dans l'état nominal NOM.

En revanche, lorsque le niveau N2 est supérieur ou égal au second seuil d'interférence S2, on considère que des interférences sont détectées et que leur niveau perturbe les communications en cours.

Avantageusement, le second seuil S2 peut être ajusté de manière à ce que les interférences détectées par la station OTP soient interprétées comme des perturbations causées par une station voisine OTM. Le second seuil S2 est alors avantageusement choisi à une valeur élevée, de manière à laisser le temps à la station OTM de reconfigurer ses ressources radio avant que la station OTP prioritaire ne lance la reconfiguration de ses propres ressources.

Ainsi, suite à une détection d'interférence à l'étape 230, la station OTP bascule dans un mode de fonctionnement SECCOM.

La reconfiguration des ressources radio de la station OTP 11 consiste à modifier une ressource de puissance et/ou une ressource de fréquence de la station OTP.

Dans le présent mode de réalisation, seul un repli fréquentiel de la station OTP, hors de la sous-bande spectrale occupée est réalisé.

En effet, les communications dans la bulle fixe 31 étant considérées comme prioritaires, il est difficile de diminuer la puissance de la station OTP 11 sans risquer de perdre les communications en cours, d'autant que le réseau est déjà déployé avec des configurations de puissance d'émission optimisées pour limiter les interférences inter-cellules avec les autres stations OTP voisines du réseau. Dès lors, il n'est pas pertinent de modifier la puissance de la station OTP en cas d'interférences, au risque de perdre de nombreuses communications, ou à l'inverse d'interférer davantage avec les autres stations OTP.

Ainsi, dans l'étape 270, le contrôleur 14 reconfigure alors en fréquence la station OTM 11 de manière à effectuer un repli fréquentiel.

Ainsi, dans l'étape 270, la station OTM 11 se replie sur une sous-bande de fréquence dite de repli qui est une sous-bande de fréquence libre de la bande de fréquence exploitée par l'infrastructure de radiocommunication 1.

Dans un mode de réalisation simple, l'étape 270 prévoit que le contrôleur 14 pilote la station OTP 11 pour effectuer un scan fréquentiel de l'intégralité de la bande de fréquence, afin d'identifier les sous-bandes libres de toutes interférences.

De préférence, la bulle mobile continue d'émettre sur sa sous-bande. Chaque bulle fixe effectue un balayage fréquentiel pour détecter l'ensemble des sous-bandes libres. Les bulles fixes appliquent ensuite une méthode d'allocation de canaux distribuée pour répartir les sous-bandes identifiées comme libres entre elles. Cette méthode est par exemple présentée dans l'article de J. Gaveau, X. Leturc, C. J. Le Martret and M. Assaad, "Trial and Error Learning for Dynamic Distributed Channel Allocation in Random Medium," in IEEE Transactions on Wireless Communications, vol. 20, no. 12, pp. 8177-8190, Dec. 2021, doi: 10.1109/TWC.2021.3090924.

Une fois le repli fréquentiel effectué vers l'une des sous-bandes identifiées comme libre, le procédé 200 passe dans l'étape 280.

Dans l'étape 280, le contrôleur 14 pilote la station OTP 11 pour effectuer un scan fréquentiel de l'intégralité de la bande de fréquence.

Si la bande de fréquence n'est pas totalement libre, le procédé 200 réitère périodiquement l'étape 280.

Si la bande de fréquence est libre, la station de base 11 est basculée du mode SECCOM au mode nominal NOM et le procédé 200 revient à l'étape 220.

Dans une variante de réalisation, dans l'étape 170 (270), au lieu de réaliser un balayage fréquentiel pour identifier une sous-bande de repli possible, une ou plusieurs sous-bande(s) de repli sont allouées à la station OTM et désallouées à la station OTP.

Des sous-bandes de repli sont allouées uniquement à la station OTM 21. Les sous-bandes de repli allouées à la station OTM ne doivent pas faire partie des sous-bandes utilisables par les stations OTP pour éviter que les stations interfèrent entre elles après repli.

Les sous-bandes de repli peuvent être allouées/désallouées de manière fixe : lors de l'étape de configuration 110 pour la station OTM et 210 pour la station OTP, le contrôleur associé mémorise une liste des sous-bandes allouées à une station OTM et une liste des sous-bandes interdites à une station OTP, lors d'un éventuel passage au mode SECCOM et la mise en oeuvre d'un repli fréquentiel.

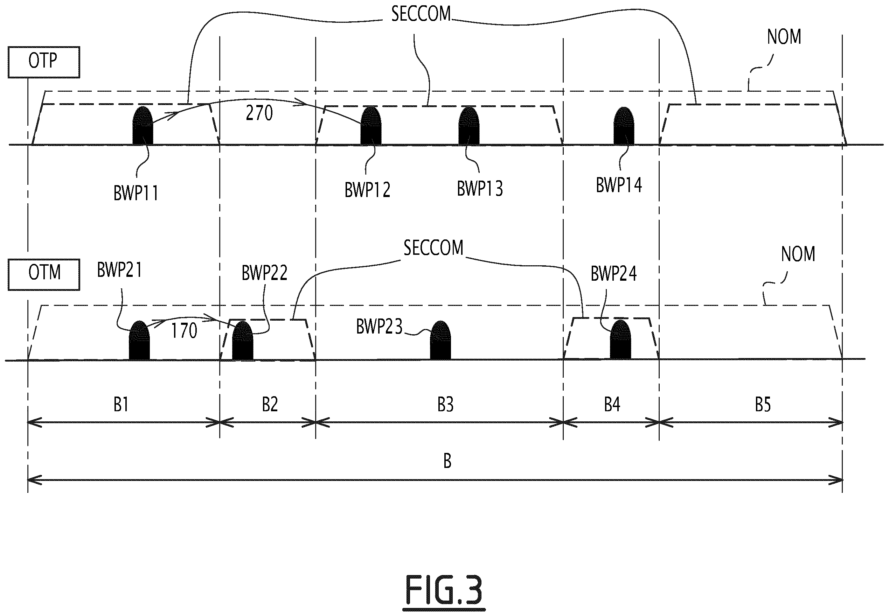

Une implémentation particulièrement avantageuse d'une allocation/désallocation fixe peut être faite selon le standard 5G en considérant qu'une sous-bande est une portion de bande - BWP (« bandwidth part »). Une illustration de l'utilisation des BWPs est montrée sur la figure 3.

Selon le standard 5G, lorsqu'un équipement utilisateur établit un lien avec une station de base, il est configuré pour pouvoir opérer sur le canal montant et le canal descendant, sur un maximum de quatre BWPs prédéfinis. A chaque instant, un équipement utilisateur utilise un seul BWP actif parmi les quatre prédéfinis.

Selon l'invention, un équipement utilisateur d'une bulle mobile est configuré avec au moins un BWP appartenant aux sous-bandes de repli allouées à la station de base OTP.

Selon l'invention, un équipement utilisateur d'une bulle fixe est configuré avec au moins un BWP hors des sous-bandes interdites, désallouées à la station de base OTP.

En mode NOM, la station OTM 21 peut utiliser n'importe quel BWP de la bande B. Elle configure par exemple l'équipement utilisateur 41, avec quatre BWPs, respectivement BWP21 BWP22, BWP23 et BWP24.

Le BWP21 est actif au moment où la station OTM bascule en mode SECCOM et décide d'un repli fréquentiel (étape 170). Suite au repli, la station de base OTM ne peut fonctionner que sur les portions B2 et B4 de la bande B qui lui ont été allouées par configuration et c'est le BWP22 qui est par exemple sélectionné en tant que sous-bande de repli et devient actif pour la communication avec l'équipement utilisateur 41₁.

En mode NOM, la station OTP 11 peut utiliser n'importe quel BWP de la bande B. Elle configure par exemple l'équipement utilisateur 31₁ avec quatre BWPs, respectivement BWP1 1 BWP12, BWP13 et BWP14.

Le BWP11 est actif au moment où la station OTP bascule en mode SECCOM et décide d'un repli fréquentiel (étape 270). Suite au repli, la station de base OTP ne peut fonctionner que sur les portions B1, B3 et B5 de la bande B, les portions B2 et B4 lui ayant été désallouées par configuration et c'est le BWP12 qui est par exemple sélectionné en tant que sous-bande de repli et devient actif pour la communication avec l'équipement utilisateur 31₁.

Un intérêt de l'utilisation des BWPs réside dans le fait qu'aucune signalisation n'est envoyée en dehors des BWPs actifs.

A noter qu'il est aussi possible d'utiliser d'autres méthodes de repli fréquentiel planifié, comme le gel des ressources au niveau d'un planificateur de station de base (« scheduler »). Cette méthode, tout comme le changement de portion de bande - BWP, se fait instantanément et sans coupure de service.

Dans une autre variante de réalisation, les étapes 140, 150, 160 sont remplacées par une unique étape de mise en oeuvre d'un algorithme d'IA.

La difficulté réside dans l'identification des conditions dans lesquelles la station OTM 21 doit baisser (augmenter) sa puissance et dans lesquelles elle doit arrêter de la baisser (de l'augmenter).

Dit autrement, la valeur du palier de régulation de puissance en fonction des interférences détectées doit être optimisée, afin d'autoriser un ajustement adapté de la puissance de la station OTM 21 pour ne plus interférer sur la bulle voisine, en limitant la perte de qualité sur ses propres communications. Un tel ajustement adaptatif présente l'avantage de s'effectuer plus rapidement qu'un ajustement itératif comme présenté ci-dessus.

Dès lors, un algorithme d'lA est avantageusement implémenté pour identifier ce palier.

L'algorithme d'IA est par exemple du type classifieur pour séparer une situation acceptable pour la station OTM 21 d'une situation inacceptable. Il s'agit par exemple d'un classifieur de niveau d'interférences. Il prend en entrée différents indicateurs de la qualité des communications sur la bulle et délivre en sortie une classe d'interférences sélectionnée parmi une pluralité de classes d'interférences possibles.

Le palier est par exemple déterminé en fonction de données telles que :
- la vitesse de la station OTM 21 (mesurée par exemple avec un capteur sur la station OTM 21, par mesure Doppler sur les communications en cours, ou autre) ;
- des critères sur l'évolution (notamment la diminution) d'un ou plusieurs indicateurs de performance - KPI (qualité du signal, MCS, CQI, #Retransmissions, etc.) indicatifs d'un rapprochement de la station OTM 21 de la station voisine OTP 31 ; et/ou
- du débit voulu sur les liaisons de communication dans la bulle mobile.

La diversité de ces données rend pertinente l'utilisation d'un algorithme d'IA, qui permettra d'estimer l'impact de manière précise et donner une valeur instantanée du palier qui soit adaptée à la situation courante rencontrée.

Il a été choisi d'utiliser comme algorithme d'lA un algorithme du type machine à vecteurs de support - SVM pour la réduction de la puissance pour gérer l'entrée de la bulle mobile dans la bulle fixe, car un tel algorithme prédit bien les paliers élevés.

Il a été choisi d'utiliser comme algorithme d'lA un algorithme du type K plus proches voisins - K-NN pour augmenter la puissance lorsque la bulle mobile sort de la bulle fixe.

Si une mise en oeuvre en 5G a été plus particulièrement présentée, l'invention peut être appliquée aux autres standards de radiocommunication passés ou à venir. L'homme du métier saura comment adapter l'enseignement technique de la présente description.

Pour une station de base OTP, le seuil de détection d'interférence peut être plus conservatif, afin de laisser une station de base OTM se reconfigurer avant d'entamer sa propre reconfiguration. Cela évite à une station de base d'un réseau déployé de faire un repli fréquentiel trop précipitamment, sans attendre de voir si la reconfiguration de la station de base OTM est suffisante pour réduire les interférences à un niveau acceptable.

Le mode SECCOM a pour objectif de maintenir les communications en cours, en priorité celles du réseau fixe / déployé, et ensuite, si possible, celles des stations en mobilité. Pour ce faire, en mode SECCOM, on joue sur différentes ressources telles que les ressources fréquentielles ou la puissance d'émission des antennes. D'autres stratégies pourraient être mises en oeuvre.

Si dans la présente description les cas de la reconfiguration de la puissance et de la fréquence ont été évoqué, en variante ou en complément d'autres ressources radio pourraient être reconfigurées, comme par exemple une directivité spatiale (pour faire de la formation de faisceaux).

## Revendications

1. Procédé (100, 200) de reconfiguration automatique des ressources d'une première station de base d'une infrastructure de radiocommunication (1), l'infrastructure de radiocommunication comportant la première station de base et une seconde station de base, une station de base parmi les première et seconde stations de base étant fixe et l'autre station de base parmi les première et seconde stations de base étant mobile, les première et seconde stations de base n'étant pas fédérées, **caractérisé en ce que** le procédé est mis en oeuvre par un premier calculateur associé à la première station de base, et comporte les étapes consistant à :
- évaluer (120, 220) périodiquement des interférences ; et,
- en cas de détection d'interférences, reconfigurer (140, 170, 270) au moins une ressource radio de la première station de base.

2. Procédé selon l'une quelconque des revendications précédentes, dans lequel ladite au moins une ressource radio reconfigurée est choisie parmi une puissance, une fréquence et une directivité de la première station de base.

3. Procédé selon la revendication 1 ou revendication 2, dans lequel l'étape d'évaluation des interférences consiste à détecter des interférences subies sur une première bulle associée à la première station de base et causées par les communications sur une seconde bulle associée à la seconde station de base, ou à estimer des interférences induites sur la seconde bulle par les communications sur la première bulle.

4. Procédé selon l'une quelconque des revendications précédentes, dans lequel l'étape d'évaluation des interférences est fondée sur des mesures de la qualité des communications sur des liaisons montantes et/ou descendantes entre chaque équipement utilisateur connecté à la première station de base.

5. Procédé selon l'une quelconque des revendications précédentes, dans lequel, la première station de base étant la station mobile et la seconde station de base étant la station fixe, lors de l'étape de reconfiguration, la première station de base, pour ne pas perturber les communications des équipements utilisateurs connectés à la seconde station de base, ajuste (140) une puissance d'émission instantanée pour chercher à réduire les interférences et, lorsque la puissance d'émission instantanée (P) devient inférieure ou égale à une puissance d'émission minimum (Pmin), effectue (170) un repli fréquentiel sur une sous-bande dite de repli, identifiée comme libre.

6. Procédé selon l'une quelconque des revendications 1 à 4, dans lequel, la première station de base étant la station fixe et la seconde station de base étant la station mobile, lors de l'étape de reconfiguration, la première station de base, pour protéger ses communications des équipements utilisateurs connectés à la première station de base, effectue (270) un repli fréquentiel sur une sous-bande dite de repli, identifiée comme libre.

7. Procédé selon la revendication 5 ou la revendication 6, dans lequel : la sous-bande de repli est identifiée par un balayage fréquentiel de la bande de fréquence de fonctionnement de l'infrastructure de radiocommunication ; la sous-bande de repli est identifiée à partir des interférences détectées ; ou la sous-bande de repli est prédéfinie par configuration de la première station de base.

8. Procédé selon la revendication 7, dans lequel, pour prédéfinir la sous-bande de repli, le procédé comporte en outre une étape de configuration initiale (110, 120) dans laquelle un contrôleur associé à la première station de base mémorise une première liste de sous-bandes allouées à la première station de base et un contrôleur associé à la seconde station de base mémorise une seconde liste de sous-bandes interdites à la seconde station de base, la première liste et la seconde liste se recouvrant sur au moins une sous-bande définie comme la bande de repli permettant à la première station de base de se replier en cas de détection d'interférences.

9. Procédé selon l'une quelconque des revendications 5 à 8, dans lequel une sous-bande est une portion de bande telle que définie dans la version 15, publiée en décembre 2017, du standard de cinquième génération de téléphonie mobile.

10. Procédé selon l'une quelconque des revendications précédentes, dans lequel l'étape d'évaluation des interférences correspond à l'exécution d'un algorithme d'apprentissage automatique convenablement paramétré pour, à partir d'une pluralité de mesures de la qualité des communications sur des liaisons montantes et/ou descendantes entre chaque équipement utilisateur connecté à la première station de base, déterminer une classe d'interférences.

11. Infrastructure de radiocommunication (1) comportant une première station de base et une seconde station de base, une station de base parmi des première et seconde stations de base étant fixe et l'autre station de base étant mobile, les première et seconde stations de base n'étant pas fédérées, **caractérisée en ce que**, la première station de base étant connectée à un premier contrôleur, le premier contrôleur est programmé pour mettre en oeuvre un procédé de reconfiguration d'une ressource radio de la première station de base conforme à l'une quelconque des revendications précédentes.

12. Programme d'ordinateur comportant des instructions logicielles qui, lorsqu'elles sont exécutées par un premier contrôleur d'une première station de base d'une infrastructure de radiocommunication conforme à la revendication 11, mettent en oeuvre un procédé de reconfiguration d'une ressource radio de la première station de base, ledit procédé étant conforme au procédé selon l'une quelconque des revendications 1 à 10.
